# EUROPEAN PATENT APPLICATION

(11) **EP 0 618 563 A1**
(43) Date of publication of application: **05.10.1994**
(21) Application number: 94104684.9
(22) Date of filing: 24.03.1994
(51) Int. Cl.: G09G 5/06, G09G 5/18

(54) **Color palette and clock combination**

(30) Priority: 31.03.1993 US 40643
(71) Applicant: MUSIC SEMICONDUCTURS, CORP., Colorado Springs, Colorado 80910 (US)
(72) Inventor: Threewitt, Norman B., Colorado 80906 (US)
(74) Representative: Wilhelm & Dauster Patentanwälte European Patent Attorneys

(57) **Abstract**

A color palette and clock generator are combined on a single integrated circuit. At least one phase-locked loop and a loop filter can also be provided on the same integrated circuit. Although the phase-locked loop synthesizes a set of predetermined frequencies, each such loop can be programmed by a user to permit synthesizing of other frequencies. Despite the close proximity of the color palette and clock generator, the integrated circuit is designed to ensure that the resulting graphics display on a display unit is not adversely affected by jitter or noise. Power management means are included to reduce active and standby power levels for space-constrained and power-limited systems.

## Description

### 1.0 BACKGROUND OF THE INVENTION.

### 1.1 Technical Field.

This invention pertains to a color palette and clock generator on the same integrated circuit, for use in a graphics system.

### 1.2 Background Art.

A typical graphics system comprises five elements: a display unit (often a cathode ray tube), and four components located on a circuit board connected to the display unit. Those four components are a frame buffer, graphics controller, timing clock generator (clock), and color palette. The color palette comprises a RAM-based look-up table and a digital-to-analog converter (DAC). The display unit receives color information in analog form from the other components in the graphics system, allowing each picture element (pixel), or dot, on the screen of the display unit, to be provided with a set of primary colors in a range of intensities. For example, if three primary colors, blue, red, and green, are utilized, and six bits of information representing the intensity of each color are stored with respect to each pixel, then 2¹⁸ or 256K possible colors are available for each pixel after conversion to analog by the DAC of the color palette.

The frame buffer is a high-speed random access memory (RAM) device. In bit-mapped graphics systems, a common type of graphics system, the frame buffer contains an address for every pixel on the screen. Stored at each such address is the color information for each pixel on the display unit. Thus, the size of the frame buffer depends on the number of pixels and number of colors for each pixel to be portrayed on the screen. For example, in one typical graphics system, a screen with 307,200 (300K) pixels, commonly arrayed as 480 lines of 640 pixels each, has the possibility of displaying each pixel with one of 256K possible color options, based on six bits of color information for each of three primary colors. Higher pixel resolution is possible, however, by increasing the number of pixels on the screen. The number of possible colors (color resolution) is exponentially proportional to the number of bits of color information stored in the frame buffer with respect to each pixel and, correspondingly, to the number of bits for each DAC in the color palette. In either case, such higher resolution requires significantly more memory for storage of color information in the frame buffer.

The color palette significantly reduces the size of the memory required in the frame buffer, by providing an indirect addressing means. Rather than storing pixel colors directly, only the look-up table address need be stored in the frame buffer. The DACs in the color palette convert binary encoded digital color information stored in the frame buffer or the look-up table RAM to analog form. Thus the color palette function is an inherent mixed-signal (part analog and part digital) function. Typical of the color palette used in a graphics system is the color graphics control system described in U.S. Patent No. 4,769,632 to Work et al. Japan Patent 4-51090 describes a color palette device which utilizes two different clocks to perform pipeline processing. U.S. Patents No. 4,799,053 and 4,825,390 to Van Aken et al. relate to specialized color palettes.

The clock generator is also a mixed-signal component. The clock generates a timing signal or signals that drive the operation of the other components. Common graphics systems support a variety of monitor types with different screen resolutions (both pixel and color). Thus, it is advantageous to have a number of clock frequencies from which to choose.

The graphics controller is a digital component. The controller reads the frame buffer, transfers the digital information stored therein through the color palette, and converts the digital information into raster format (scanned by rows) to be conveyed to the screen.

Theoretically, a graphics system can be constructed more economically by combining some of the functions of the four board components onto a single integrated circuit, resulting in fewer total components. With this in mind, Cirrus Logic, Inc. presently produces a chip which includes the functions of a VGA controller, color palette, and clock, sometimes referred to as a "Triple Combo". The Triple Combo was introduced to market after the invention of the integrated circuit claimed herein. Although the Triple Combo establishes a cost-effective device for accomplishing three functions at relatively low speeds, problems result when the pixel rates increase. For example, if the pixel rate is increased to 80MHz, to enable the display of more pixels on the screen, electrical noise is caused by the proximity of the digital graphics controller to the mixed-signal components on the same chip. Such noise is seen as distortions and jitter on the screen.

Thus, although it is advantageous to combine features of the four board components of a typical graphics system, the Triple Combo presently produced has significant disadvantages which make it impractical in higher speed systems. A cost-effective multiple function integrated chip is desirable, which does not suffer the electrical noise problems associated with the Triple Combo.

A variety of specialized devices and techniques related to providing color information to a screen are known in the prior art. A video display controller is described in U.S. Patents No. 4,684,942 and 4,737,772 to Nishi et al. Similarly, a method and apparatus for accessing a color palette in a color graphics system is taught in U.S. Patent No. 4,815,033 to Harris. An extendable color look-up table is disclosed in U.S. Patent No. 5,038,300 to Seiler et al.

An example of a specialized VGA controller for use in an Apple computer system is described in U.S. Patent No. 4,823,120 to Thompson et al. Variable color display devices for use with a light emitting diode (LED) device, as opposed to a cathode ray tube, are described in U.S. Patents No. 4,845,481 and 4,965,561 to Havel.

### 2. DISCLOSURE OF THE INVENTION.

### 2.1 Summary of the Invention.

An object of this invention is to provide a cost-effective method of combining a color palette and a clock generator on a single integrated circuit for use in a graphics system without creating performance compromises inherent in other combinations.

Another object of this invention is to provide a combined color palette and clock generator apparatus which assumes a set of selectable known frequencies when power is turned on, but which can be programmed to permit other frequencies.

Yet another object of this invention is to provide a combined color palette and clock generator apparatus which includes a loop filter on the integrated circuit to reduce relative cost.

Yet another object of this invention is to provide a combined color palette and clock generator which is programmable through the same means as the color palette by itself.

Yet another object of this invention is to provide a combined color palette and clock generator which has power management capability needed in portable and space constrained systems.

The apparatus used to achieve these objectives includes a color palette, a timing means, one or more phased-locked loop means, and appropriate control means, all combined on a single integrated circuit. The color palette performs a standard function of generating analog electrical signals for respective color inputs to a raster-scan color display unit. The analog signals correspond to a succession of pixel values derived from a frame buffer directly or indirectly storing pixel values for a scanning sequence, located on the same circuit board.

The timing means may conveniently be a clock generator which synthesizes a pixel frequency corresponding to that of the raster scan for the appropriate display unit. The timing means also generates timing control signals to enable synchronization of the generation of the analog signals by the color palette, and may provide additional clock signals that may be used, for example, to control frame buffer activities.

The clock generator includes one or more phase-locked loops on the same integrated circuit. Each phase-locked loop synthesizes a predetermined frequency, with one of such frequencies being the appropriate pixel frequency. Other phase-locked loops may synthesize other clock frequencies for use in other portions of the system as described above. A loop filter may be advantageously included to filter electronic signals from each phase-locked loop which are above a predetermined threshold frequency, thus allowing stable operation of the clock synthesis circuits.

Each phase-locked loop is programmable so that frequencies other the the predetermined frequencies may be achieved. Thus, although a particular set of clock frequencies most likely to be utilized in a specific graphics system may be predetermined, so that such frequencies are generated as soon as the integrated circuit receives electric power, those frequencies can be altered to provide the opportunity to synthesize a different set of frequencies which are useful in a different context.

The control means may conveniently comprise a control port and one or more pixel ports. The control port, which might be merged with one of the pixel ports to save costs, permits control data to be sent to the integrated circuit and control data to be read back to the graphics controller in the same graphics system. Each pixel port is designed for pixel data information to be sent to the integrated circuit from the frame buffer, either through a graphics controller or by-passing said controller. A typical pixel port is capable of accepting eight bits of information. However, the integrated circuit may be constructed with a pixel port or ports capable of accepting 16 bits, 24 bits, or 32 or more bits of data each. Use of a pixel port capable of accepting 24 bits or 32 bits of pixel data permits significant improvement in color resolution over typical graphics capabilities since more color information is available for each pixel during each clock cycle, thus raising the system performance without increasing the clock frequency.

The same control port is used to control both the clock generator and the color palette. As a result, a significant reduction is achieved in the number of pins required to and from the controller, which otherwise must separately access the clock generator and the color palette through multiple pins. By merging the register space associated with control of the clock generator and color palette, a more economical graphics system is made possible.

Both the clock generator and color palette can be powered down to a low power operation. As a result, the strain on batteries supporting a portable system is lessened. Furthermore, the power management capability decreases beat produced by the system as is particularly important in space-constrained systems.

The novel features that are considered characteristic of the invention are set forth with particularity in the claims. The invention itself, both as to its construction and its method of operation, together with additional objects and advantages thereof, will best be understood from the description of specific embodiments which follows, when read in conjunction with the accompanying drawings.

### 2.2 Brief Description of the Drawings.

FIG. 1 is a block diagram of a graphics system, including a combined color palette and clock generator according to the present invention.

FIG. 2 is a block diagram of a phase-locked loop means of the present invention.

FIG. 3 is a pictorial view of a typical board layout for a graphics system, illustrating the space savings accomplished by use of the instant invention.

### 2.3 Detailed Description of the Preferred Embodiment.

The present invention involves an apparatus for combining a color palette and clock synthesizers on the same integrated circuit. In the following description, numerous specific details are set forth, such as specific number of bits, number of pins, etc., in order to provide a thorough understanding of the present invention. It will be obvious, however, to one skilled in the art that the present invention may be practiced without these specific details. Some well-known methods and structure have not been set forth in order not to unnecessarily obscure the description of the present invention.

The present invention is currently realized as part of a VGA graphics system. The present invention is readily adaptable to other types of graphics systems, however. Therefore, those skilled in the art may readily practice the invention in a variety of contexts, possibly including certain graphics systems which have not been developed yet.

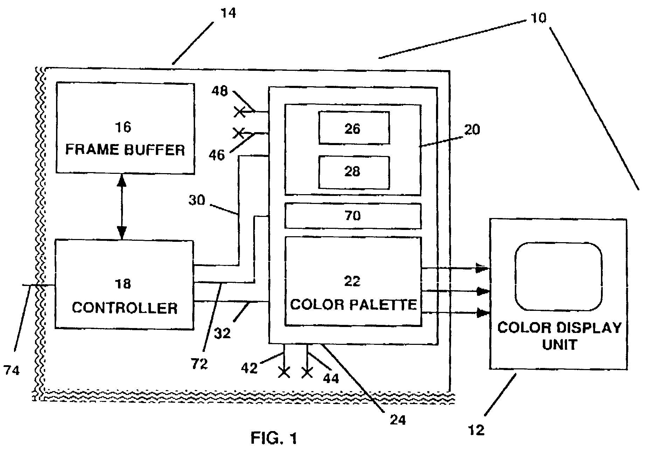

The method of combining a color palette and timing means according to the present invention can be better understood by reference to Fig. 1. A typical graphics system 10 includes a raster scan color display unit 12, such as a VGA monitor, and a circuit board 14 on which other components of the system are mounted. Other components of the computer system (not shown) may be mounted on the circuit board 14 as well. Four basic components which are essential to the graphics system 10 are a frame buffer 16, a controller 18, a clock generator or other timing means 20, and a color palette 22. The present invention involves a method of combining the clock generator 20 and the color palette 22 onto a single integrated circuit 24.

As can be seen in Fig. 1, the controller 18 and the clock-color palette chip 24 are linked by a control port 30 and at least one pixel port 32. The pixel port 32 may be capable of accepting eight-bit data. More sophisticated pixel ports 32 are possible, enabling pixel data information to be conveyed in 16-bit, 24-bit, or 32-bit streams. In this manner, more information may be conveyed regarding each pixel on the screen of the display unit 12, resulting in higher color resolution.

The control port 30 will typically comprise two pins (not shown) for reading and writing control data between the controller 18 and the clock-color-palette chip 24. By using a single control port 30 to access both the clock component 20 and the color palette component 22, significant space and cost efficiencies are obtainable compared to typical graphics systems in which separate control ports are necessary for the clock generator and the color palette.

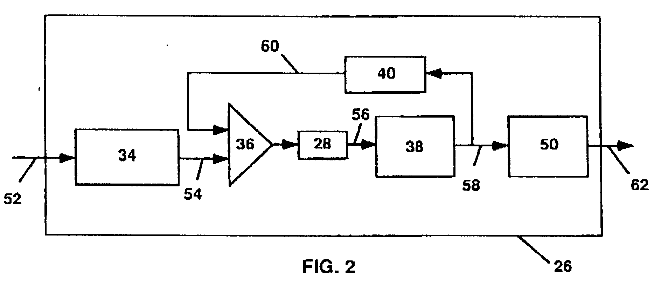

At least one phase-locked loop 26 is included on the clock-color-palette chip 24. The phase-locked loop 26 is illustrated in Fig. 2. One phase-locked loop 26 synthesizes a clock frequency which corresponds to the pixel frequency of the raster scan for the applicable display unit 12. Since certain standard pixel frequencies are typically used by VGA monitors, the phase-locked loop 26 which synthesizes the pixel frequency is initialized with a set of predetermined frequencies, corresponding to such typical frequencies, from which the appropriate pixel frequency can be easily selected. Furthermore, the set of pixel frequencies synthesized by that phase-locked loop 26 may be modified at the discretion of the user, to accommodate atypical graphics systems. In a similar manner, each phase-locked loop 26 which synthesizes a clock frequency other than the pixel frequency will be programmed with a set of predetermined frequencies, which may be altered by the user.

As shown in Fig. 2, the programmable phase-locked loop 26 receives an input signal on signal line 52 with a known frequency F, generated by a clock oscillator on chip or an external clock signal (not shown). This known frequency F is then divided by an integer N, which integer is selected by the user from a register 34. Although certain commonly used N values are programmed into the register 34, the user can modify this selection with a wide number of integers. This reference signal on signal line 54, now at a frequency of F/N, is then compared to another signal on signal line 60 of approximate frequency F/N, using a phase comparator 36. The signal on signal line 60 is derived from output signal on signal line 58 by dividing the frequency of said output signal on signal line 58 by an integer M, which integer is selected by the user from a register 40. Although certain commonly used M values are programmed into the register 40, the user can modify this selection with a wide number of integers. The output signal on signal line 58, at a frequency approximately equal to (F/N) x (M), is created by a voltage-controlled oscillator (VCO) 38.

If the phase comparator 36 discerns a difference in phase or frequency between signals on signal lines 54 and 60, the comparator 36 generates an error voltage signal on signal line 56 proportional to said phase or frequency difference that causes the VCO 38 to change frequency until said error voltage is reduced to zero, assuring that the output signal on signal line 58 is synchronized (phase-locked) to the reference signal on signal line 54. Any spurious noise signals present on error voltage signal on signal line 56 may be conveniently filtered out of the system by a loop filter 28 located on the same chip 24. The appropriately synchronized output signal on signal line 58, now accurately at frequency (F/N) x (M), may be scaled down by dividing by an integer S which the user may select from a register 50. As can readily be seen, by appropriately selecting values for the frequency of input signal on signal line 52, N, M, and S, the user can synthesize clock signals on signal line 62 with a wide range of frequencies, suitable for application in a graphics system 10.

Although placing the phase-locked loop 26 on the same chip 24 as the color palette 22 results in a more economical and space-efficient system, such combinations in theory would result in significant distortions and jitter on the picture shown on the display unit 12. Significant clarity and resolution is made possible in the picture by isolating electrical noise generated by other portions of the graphics system 14 from the sensitive circuitry in the phase-locked loop 26. This isolation is accomplished by dedicating separate power 42 and ground 44 pins for the most sensitive analog portions of the integrated circuit 24, as shown on Fig. 1. These analog pins 42,44 are separated from power 46 and ground 48 pins for digital elements and less sensitive analog elements on the chip 24. As a result, it is possible to incorporate the sensitive phase-locked loops 26 and loop filters 28 on the same chip 24 as less sensitive electronic components.

Inclusion of power management capabilities on the chip 24 extends the value of the chip 24 to include applications in power-sensitive systems, such as portable computers. It is important in said applications to reduce board space, cost, active power, and stand-by power levels, all of which are achieved by the present invention.

Power management is achieved by temporarily disabling particular portions of the circuitry of the single integrated circuit 24 during time periods in which such circuitry is not needed. As a result, while the integrated circuit 24 is active, certain modes are disabled. The power management means 70 are invoked by a system power management control means 74, an input to the controller 18. For example, the power management means 70, controlled by a graphics sub-system power management means 72, disables the phase-locked loop 16 when the clock output is not needed, or lowers clock frequencies when appropriate, resulting in less power consumption. The power management means 70 also includes circuitry to disable the DAC of the color palette 22, when the DAC is not needed to drive an external monitor, allowing for lower power consumption while the RAM portion of the color palette 22 continues to function. Similarly, the power management means 70 includes circuitry to disable the RAM of the color palette 22, when it is desirable to place the color palette 22 in a dormant mode.

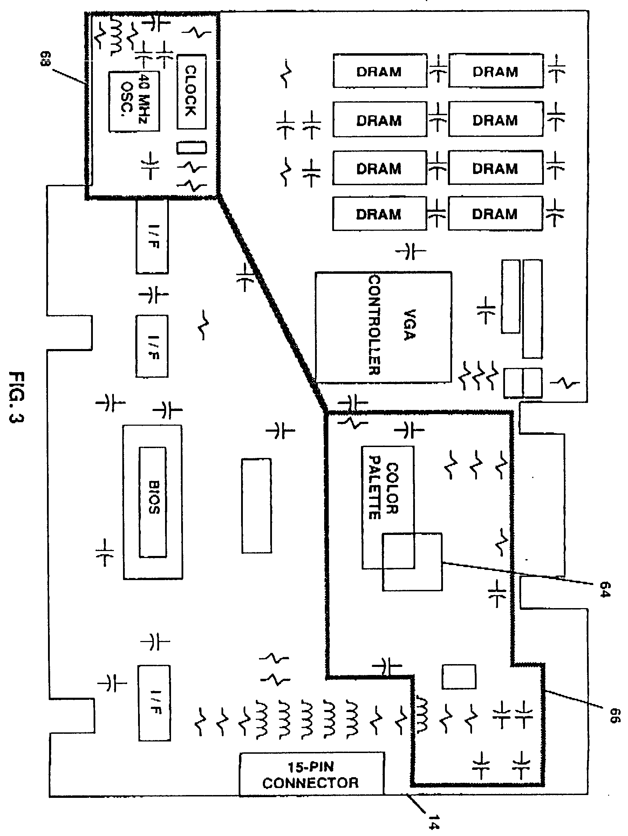

As can be readily seen by those skilled in the art, use of the invention will save significant board space and cost in constructing a circuit board 14 in a graphics system 10. As depicted in Fig. 3, a scaled pictorial view of a circuit board 14, the board space required using a clock-color-palette chip 24 is completely shown as area 64. This subsumes the first portion of the board space 66 and the second portion of board space 68 which are both required if a separate clock and color palette are mounted on the board 14.

The invention has been described in detail with particular reference to preferred embodiments thereof. As will be apparent to those skilled in the art in the light of the accompanying disclosure, many alterations, substitutions, modifications, and variations are possible in the practice of the invention without departing from the spirit and scope of the invention.

## Claims

1. A single integrated circuit for use in a graphics system including an analog color display unit, a frame buffer, and a controller, comprising:
(a) a color palette for generating analog electrical signals for respective color inputs to the display unit in response to a succession of pixel values derived from the frame buffer storing pixel values for a scanning sequence,
(b) a timing means for synthesizing a pixel frequency corresponding to that of the display unit and for generating timing control signals for synchronizing the generation of said analog signals at said pixel frequency, comprising at least one phase-locked loop means for synthesizing a predetermined set of one or more pixel or other clock frequencies,
(c) control port means for sending control data to the integrated circuit and reading the control data back to the controller, and
(d) pixel port means for sending pixel data information to the integrated circuit,
(e) wherein said color palette, said timing means, said control port, and said pixel port are each located on said integrated circuit.

2. A single integrated circuit as described in claim 1, further comprising:
a loop filter means for filtering electronic signals with a frequency above a predetermined threshold frequency.

3. A single integrated circuit as described in claim 1, wherein said phase-locked loop means is programmable so that a plurality of frequencies other than the predetermined frequencies can be synthesized.

4. A single integrated circuit as described in claim 1, wherein said control port means further comprises a single control port by which the color palette and the timing means receive control information.

5. A single integrated circuit as described in claim 1, wherein said pixel port means further comprises a single pixel port capable of accepting eight bits of pixel information.

6. A single integrated circuit as described in claim 1, wherein said pixel port means further comprises a single pixel port capable of accepting 16 bits of pixel information.

7. A single integrated circuit as described in claim 1, wherein said pixel port means further comprises a single pixel port capable of accepting 24 bits of pixel information.

8. A single integrated circuit as described in claim 1, wherein said pixel port means further comprises a single pixel port capable of accepting 32 bits of pixel information.

9. A single integrated circuit as described in claim 1, wherein said pixel port means further comprises multiple pixel ports capable of accepting pixel information.

10. A single integrated circuit as described in claim 1, further comprising power management means.

11. A single integrated circuit as described in claim 10, wherein said power management means comprises a circuitry means wherein portions of the circuitry can be switched to a low stand-by power state to temporarily disable said portions of the circuitry.

12. A method of combining a color palette and timing means on the same integrated circuit, for use in a graphics system including an analog color display unit, a frame buffer, and a controller, comprising:
(a) placing a color palette for generating analog electrical signals for respective color inputs to the display unit in response to a succession of pixel values derived from the frame buffer storing pixel values for a scanning sequence on the integrated circuit,
(b) placing on the integrated circuit a timing means for indicating a pixel frequency corresponding to that of the display unit and for generating timing control signals for synchronizing the generation of said analog signals at said pixel frequency, comprising at least one phase-locked loop means for synthesizing a predetermined pixel or other clock frequency,
(c) providing a control port means for sending control data to the integrated circuit and reading the control data back to the controller, and
(d) providing a pixel port means for sending pixel data information to the integrated circuit.
